# EUROPEAN PATENT APPLICATION

(11) **EP 4 283 143 A1**
(43) Date of publication of application: **29.11.2023**
(21) Application number: 22275071.3
(22) Date of filing: 27.05.2022
(51) Int. Cl.: F16C 1/02, F16C 3/02

(54) **COMPOSITE TUBE**

(71) Applicant: Crompton Technology Group Limited, Solihul, West Midlands B90 4SS (GB)
(72) Inventor: BEALE, Thomas Charles, Shirley, Solihull, B90 4SS (GB); BERNARD, James William, Shirley, Solihull, B90 4SS (GB)
(74) Representative: Dehns

(57) **Abstract**

A composite tube (2) comprising a region of greater diameter forming a bellow (4). The bellow (4) has a first side (20) and a second side (21) spaced apart in the axial direction of the tube (3). Each side of the bellow (20, 21) comprises at least one hole (6, 7) and the at least one hole (6) on the first side (20) is offset in relation to the at least one hole (7) on the second side (21). The holes in the bellow provide increased flexibility, thereby allowing a greater amount of bending or articulation in the shaft. The holes reduce the amount of material in the sides of the bellow, thereby reducing the material stiffness and thereby increasing the flexibility. As the increased flexibility is provided in the sides of the bellow, the flexibility is achieved without increasing the diameter or axial length of the bellow. Axial length is kept to a minimum as a single bellow can provide the desired degree of flexibility rather than requiring the use of several bellows. This presents an advantage in applications where there is limited space or where added weight is undesirable.

## Description

### Technical Field

This disclosure relates to a hollow composite tube. In particular, the disclosure may be applicable to composite shafts such as transmission drive shafts, but may also be applicable to composite pipes acting as conduits, e.g. for transmission of fluids. More particularly, the disclosure relates to the use of bellows in such shafts for providing increased flexibility.

### Background Art

It is known to increase the flexibility of drive shafts by adding a section with bellows. Bellows are regions of larger diameter that provide the shaft with an increased flexibility and can accommodate a degree of bend or lateral displacement in the shaft. Bellows sections are typically metallic, but they often provide limited flexibility as the metal is still quite stiff and therefore the bellow does not always provide the desired degree of articulation. Articulation or bending may be desirable for a number of reasons. One reason is that the installation of a shaft (either upon initial assembly or as part of a repair process) in a confined space often requires the shaft to be bent slightly in order to place it within the desired operational location. Once installed, the bellow can return to its non-deformed state so that the shaft is straight again. Another reason is that shafts can experience small angular or lateral misalignments in use, either through tolerance stack up or due to slight movements during operation. A bellow can alleviate these misalignments and allow for proper operation to continue with the bellow absorbing the effect of the misalignments. The bellow forms part of the shaft and thus must be able to transmit the forces (whether axial or rotational or both) that are applied to the shaft during use.

Metallic bellows are typically attached to a composite shaft through a coupling, i.e. a bellows component is provided as a separate component and this separate component is then attached to the composite transmission shaft so as to introduce a region of increased flexibility. Shafts may be attached on both sides of the bellow.

Composite bellows are also known. These are typically formed from multiple layers of metal and rubber to increase the flexibility.

Torque disks can also accommodate small angular deviations between shafts, but a bellow can accommodate a greater degree of angular deviation and can also accommodate lateral misalignments. A bellow is typically used when the degree of misalignment is not so much as to require a universal joint which would be more costly, heavier and more complex.

There are two known ways of achieving increased flexibility with bellows. The first is to increase the diameter of the bellow. The larger the diameter of the below, the more flexibility it has. However, larger bellows take up more space and add more weight to the product. Space is not always available to accommodate a larger bellow and added weight can be undesirable. Both of these disadvantages are particularly applicable in aerospace applications where space is often constrained (e.g. for shafts or pipes within an aircraft wing) and any extra weight is highly undesirable for fuel efficiency.

The second way of achieving increased flexibility is to use multiple bellows along the drive shaft. Each bellow provides a certain degree of articulation, so providing several bellows multiplies up the articulation. However, this necessarily leads to a decrease in the length of the drive shaft, which can be problematic (or even impossible) in constrained spaces. For example, there may not be enough room to accommodate all the bellows that are required to provide a certain degree of articulation. In aircraft applications, there may be space at each end of the drive shaft to accommodate a region of greater diameter (i.e. a bellow), but do not have the required axial space to accommodate multiple adjacent bellows. In such applications, a single bellow provided at one or both ends of the drive shaft must provide all of the required articulation. Further, as each bellow is of larger diameter than the shaft or pipe, each bellow adds to the weight and cost which is undesirable as noted above.

### Summary of the Disclosure

According to a first aspect of the present invention, there is provided a composite tube, comprising:
a region of greater diameter forming a bellow;
wherein the bellow has a first side and a second side spaced apart in the axial direction of the tube;
wherein each side of the bellow comprises at least one hole;
wherein the at least one hole on the first side is offset in relation to the at least one hole on the second side.

The holes in the bellow provide increased flexibility, thereby allowing a greater amount of bending or articulation in the shaft. The holes reduce the amount of material in the sides of the bellow, thereby reducing the material stiffness and thereby increasing the flexibility. As the increased flexibility is provided in the sides of the bellow, the flexibility is achieved without increasing the diameter or axial length of the bellow. Axial length is kept to a minimum as a single bellow can provide the desired degree of flexibility rather than requiring the use of several bellows. This presents an advantage in applications where there is limited space or where added weight is undesirable.

Although the holes reduce the material strength of the bellow to a small degree, this has been found not to be significant and can be tolerated in many applications. In particular, the larger diameter of the bellow means that the transmission forces are spread over a larger area and the stresses are therefore reduced. One particular benefit of this is in torque transmission. The optimal fibre angle for torque transmission is normally around 45 degrees to the axis. However, because the torque is transferred around the larger diameter (and thus larger area) circumference of the bellow, the stress is reduced and therefore a fibre angle different to 45 degrees can be tolerated without adversely affecting the torque transmission characteristics. This allows a fibre angle to be selected in the region of maximum diameter of the bellow which is more optimal for achieving flexibility of the bellow. In some examples, the fibre angle tends towards circumferential at the region of maximum diameter of the bellow.

The impact of the holes on the strength can be reduced by offsetting the holes on the first side in relation to the second side. This reduces the regions of the bellow where there are holes on both sides. Having holes on both sides in the same region (e.g. fully overlapped, or not offset) means that material has been removed from the corresponding area on both sides of the bellow which leaves a region of reduced material support on both sides. The material support can be made more uniform around the bellow by offsetting the holes. An offset between the holes means that, when viewed along the axis of the shaft, the holes do not completely overlap. Viewing a hole on the first side along the axis of the shaft, the hole on the second side is considered to be at least partially offset if at least some of the material of the second side can be seen through the hole on the first side, and vice versa.

The offset between the holes on the first side of the bellow in relation to the holes on the second side of the bellow can be radial, angular, or a combination of both. The radial extent of each hole is the maximum extent of the hole along a radius of the bellow, measured from the axis of the shaft. In other words the radial extent of a hole can be determined by finding the largest radius circle centred on the tube axis that does not intersect the radially innermost part of the hole and the smallest radius circle centred on the tube axis that does not intersect the radially outermost part of the hole, and taking the difference between them. The angular extent of each hole is the maximum extent of the hole between two radii of the bellow. In other words, the angular extent of a hole can be determined by finding the radii that form a glancing contact with the two angular extremes of the hole and taking the angle between them.

In some examples, the offset is an angular offset around the axis of the tube. This arrangement allows the holes to be distributed more evenly around the axis of the bellow. This provides more uniform material properties (strength and flexibility) around the axis of the tube. This uniformity is particularly advantageous in shafts which rotate when in use, because the performance of the shaft is then more uniform as it rotates. For example, if there is a slight angular misalignment of the shafts either side of the bellow then as the shafts rotate, each angular region of the bellow will rotate through a region of compression and a region of tension. As a region with a hole has different material properties to a region with no hole, the response of the shaft will be different at different points in the rotation. This can introduce an oscillation in the shaft which must be kept within certain limits to avoid malfunction. The amount of oscillation typically varies with the speed of the shaft and thus determines a critical velocity of the shaft that cannot be exceeded in use. Distributing the holes around the bellow more evenly means that the deviations in material properties of the bellow are more uniform and therefore the amplitude of the oscillations is reduced for any given articulation. Correspondingly the critical velocity is increased and the shaft can be used at higher velocities. The ability to use a higher velocity can allow smaller and therefore lighter weight shafts to be used which provides an important efficiency gain in weight-sensitive applications such as aircraft.

In addition, where there is limited space for installation of the tube (as is sometimes the case in aircraft wings), it may be necessary for the tube to be bent slightly in order to install it in its operation location (e.g. to be passed through a narrow or awkward opening). The bellow can provide the tube with additional flexibility to bend during installation so as to facilitate such installation.

In some examples, each side of the bellow comprises a plurality of holes. This also helps with the even distribution of flexibility and of material properties as discussed above so that the oscillation of the tube can be minimised in use and the critical velocity can be increased (or maintained with a smaller tube). Further, as the bellow is most flexible where there are holes, having more than one hole allows the bellow to bend more easily in multiple directions. This makes it easier to install the tube because there are multiple ways that the tube can be aligned while still providing the maximum amount of bending or articulation.

In some examples, the holes are evenly angularly distributed around each side of the bellow. This provides more uniform/symmetrical material properties (strength and flexibility) around the axis of the tube. This symmetry (e.g. rotational symmetry) is advantageous because the shaft rotates when it is in use, therefore the performance of the shaft is more uniform as it rotates.

In some examples, all the holes have the same radial extent. In some examples, all the holes have the same angular extent. This gives the bellow a greater degree of symmetry, and therefore its material properties are more uniform around the axis of the tube. The response to articulation of the tube is more symmetrical when the holes are more similar. In some examples, the holes all have the same shape. In some examples, the shape of the holes is a rounded triangle, with a vertex of the triangle at a point closest to the axis of the tube and an edge of the triangle at a point furthest from the axis of the tube.

In some examples, the holes on the first side have no overlap in the angular direction with the holes on the second side. This arrangement means that each hole on the first side has an associated area of the second side where there is material, and vice versa. This asymmetry between the first side and the second side provides for more uniform strength around the axis of the tube. This is advantageous when the tube rotates in use as discussed above, hence the performance is more uniform around the full rotation of the tube.

In some examples, the bellow is more flexible than the rest of the tube. It is generally desirable for the rest of the tube to have a higher stiffness (lower flexibility), e.g. for better force transmission and higher speeds (in the case of a drive shaft).

In some examples, each hole has an associated region of material on the opposite side of the bellow; and when the tube bends about its axis, at least one such region of the bellow moves towards its associated hole. Due to the offset between the holes on each side of the bellow, each hole has an associated region on the opposite side of the bellow that has at least some material (i.e. it is not just another hole). Therefore, the hole and the associated region on the opposite side have different material properties, meaning that their response to the bending of the shaft is different. In particular, the associated region of material will move towards or away from the hole on the opposite side (depending on whether it is in compression or tension as a result of the bend). Essentially the hole allows the material opposite to displace inwards slightly towards the hole when in compression or to flex outwards away from the hole when in tension. This allows a portion of the bellow to bend out of a plane perpendicular to the axis of the shaft, giving the bellow increased flexibility.

A combined angular extent of the holes on one side of the bellow may be defined by taking the sum of the individual angular extents of all the holes on that side of the bellow. In some examples, the combined angular extent of holes on the first side and/or the second side is at least 90 degrees, optionally at least 120 degrees, optionally at least 150 degrees. In some examples, the combined angular extent of the holes on the first side and/or second side is no more than 210 degrees, optionally no more than 180 degrees. In some examples the combined angular extent of the holes on the first side is approximately equal to the combined angular extent of the holes on the second side. In some examples, the radial extent of the or each hole is at least 50 percent of the height of the bellow above the tube, optionally at least 80 percent. While the holes provide for increased flexibility in the bellow, they also reduce its strength. Therefore, the ranges (both radial and angular) set out above provide a balance between the need for increased flexibility with the need for a bellow with high strength.

In some examples, the diameter of the bellow is at least 1.5 times the diameter of the rest of the tube, optionally no more than 3 times the diameter of the rest of the tube. The larger the diameter of the bellow, the higher its flexibility. In some applications where space and weight are not especially limited, such as in wind turbines, the diameter of the bellow can be many times larger than that of the tube. However, the need for a high level of flexibility must also be balanced with the limited space available in applications such as aerospace, and the need to keep the weight and cost of the tube as low as possible. Therefore, it is generally preferred that the diameter of the bellow is not more than 3 times the diameter of the rest of the tube. Additionally, a bellow with diameter less than 1.5 times the diameter of the rest of the tube would in many cases not provide the shaft with a high enough level of flexibility (although of course this depends on the application).

In some examples, each of the first side and the second side of the bellow form an angle to a plane perpendicular to the axis of the tube, i.e. the sides are not perpendicular to the axis, but rather are sloped. The angle to the plane perpendicular to the axis is in some examples no more than 30 degrees, optionally no more than 10 degrees. Having a steep slope allows the bellow to reach the required diameter in a short axial length, thereby keeping the axial length of the bellow short and allowing the remaining length of the tube to be maximised, or conversely, allowing shorter tubes to be manufactured.

If the axial length of the bellow is large then the flexibility that it provides is spread over a longer tube length. This contributes to a reduction in the critical speed of the tube. As noted above, the critical speed is a limit on the rotational speed of the tube. At the critical speed, vibrations in the tube reach a resonant frequency which leads to vibrations with increased amplitude that cannot be tolerated (e.g. by the tube itself or by the other components or environment in which the tube is installed). It is advantageous for the critical speed to be as high as possible, in order to increase the range of speeds at which the tube can operate, for example in applications where the tube is being used as a drive shaft.

In some examples, the radial position of the hole can be chosen to change the stress profile of the bellow. The shear stress is inversely proportional to the radius, therefore generally the stress at the point of maximum diameter of the bellow differs from that at the point of minimum diameter (i.e. at the radius of the drive shaft). The stress also depends upon the thickness of the material and the angle that the bellow forms to the axis. The radial position of the hole on the bellow can be chosen to reduce the difference in stress between the point of maximum diameter of the bellow and the point of minimum diameter. In some examples, the radial position of the hole may be closer to the minimum diameter than to the maximum diameter. In other examples, the radial position of the hole may be closer to the maximum diameter than to the minimum diameter.

In some examples, the bellow is formed between two drive shafts of different diameters. In this example, a radial offset between the holes on each side of the bellow may be advantageous. That is, the holes on one side of the bellow may be at a different radius to the holes on the other side of the bellow.

In some examples, the composite tube is formed from fibre reinforced polymer. Fibre reinforced polymers are able to provide high strength and flexibility while maintaining low weight. This is particularly advantageous in aerospace applications where a low weight is desirable.

There are many ways of laying the fibre to produce a fibre reinforced polymer structure. For example, the fibre could be placed using filament winding, braiding, automated fibre placement, or by laying up sheets of fabric.

In some examples, the fibre reinforced polymer comprises a filament wound fibre structure. When applying fibre using filament winding, as the diameter of the tube increases, the angle of the fibre changes more towards an axial direction, i.e. the fibres become more parallel with the axis of the tube. A consequence of this is that in the region of maximum diameter of the bellow, some of the fibres are oriented more in the axial direction of the tube. This creates stiffness in the bellow that resists bending and so it reduces the overall flexibility that the bellow can create. With filament winding, it can also be difficult to keep the fibres in contact with a steep surface during the winding process without them sliding off, particularly when laying fibres on an area that is decreasing in diameter (considered in the axial direction of the winding machine). The fibres may also separate from the bellow as it reduces in diameter leading to loss of form and also voids in the finished product. It may therefore be advantageous with a filament winding process to use the fibre carrier or some other structure to bring the fibres down along the slope of the bellow as the diameter reduces, i.e. to pull the fibres back towards the smallest diameter of the tube. This does however, increase the complexity of the manufacturing process.

In some examples, the fibre reinforced polymer comprises a braided fibre structure. A braided fibre structure is advantageous because, in contrast to filament winding, as the diameter of the tube increases, the angle of many of the fibres changes more towards a circumferential direction, i.e. those fibres change more towards a hoop direction around the tube. Thus, a significant proportion of the braided fibres are oriented in the circumferential direction in the region of maximum diameter of the bellow. The advantages of this will be discussed further below. The fibres in the circumferential direction may in some examples form an angle of at least 80 degrees to the axis of the shaft.

In some example, the shaft is a drive shaft and is subject to torsional stress. In order to give the drive shaft greater strength against torsional stress, it is usually preferred to use fibres at 45 degrees to the axis of the shaft. However, the shear stress is inversely proportional to the radius, meaning that at the point of maximum diameter of the bellow shear stress is reduced. It is therefore possible to use fibres oriented in or close to the circumferential direction in the region of maximum diameter of the bellow while keeping the shear stress within acceptable limits.

In some examples therefore, the fibre reinforced polymer comprises fibres oriented in or close to the circumferential direction in the region of maximum diameter of the bellow. This gives the bellow high strength in the hoop (circumferential) direction,. It will be appreciated that not all fibres will necessarily be in the circumferential direction as the braiding process may involve laying some fibres in a substantially axial direction (termed triaxial braiding) and these fibres do not tend to be redirected to different fibre angles when the tube slope changes.

The braiding process is also advantageous as the fibres can more readily follow steep surfaces without slipping off. This includes following slopes where the diameter of the tube decreases. Thus, as steeper angles can be achieved, a bellow with shorter axial length can be achieved which increases the critical speed as discussed above.

In some examples, at least some fibres of the fibre reinforced polymer are continuous throughout the tube, and in particular across the bellow. This means that at least some of the fibres themselves extend from a first side of the bellow, across the bellow, to the second, opposite side of the bellow. Thus, these fibres have substantial length, i.e. they are not short "chopped fibres". Such continuous fibres gives the tube greater strength by transmitting tension forces across the bellow, i.e. forces applied on one side of the bellow are transmitted directly by the continuous fibres to the other side of the bellow, despite the increased flexibility of the tube. This increases the critical speed of the drive shaft compared to a drive shaft of the same diameter formed of chopped fibres. A continuous fibre structure also has lower thickness and weight compared to an equivalent strength structure formed from short chopped fibres. It will be appreciated that some continuous fibres may be cut when a hole is cut into the side of the bellow. However, those fibres can still be identified as continuous fibres as they were laid as continuous fibre before the hole was cut. Such fibres will exist in largely parallel sets (i.e. several fibres all following similar, but adjacent paths around the tube) rather than the randomly-oriented arrangements of short chopped fibre composites.

Continuous fibres also reduce problems with backlash. Backlash arises when the tube is assembled from several parts. For example, in previous bellows which are formed as a separate part and are mechanically connected on either side to the tubes, when one part starts to rotate there may be a small amount of play or movement (and therefore delay) before the other part starts to rotate. This results in a slower build up of torque transmission along the shaft. This problem is compounded when more parts are used as each connection introduces a small backlash. The bellow formed as part of the tube, i.e. with continuous fibres extending across the bellow has reduced backlash because the torque is transmitted directly across the bellow along the entire length of each fibre without requiring mechanical connections.

In some aircraft applications, such as in the wing of an aircraft, the drive shaft and bellow may need to be installed through a small opening such as a spar in the wing, meaning that the maximum diameter of the bellow is restricted. This is not so much of a problem where bellows are formed separately and attached to a shaft. However, where the bellows are formed integrally with the shaft, e.g. from a continuous fibre deposition process, the bellow must then be inserted through any such restrictions during installation. The improved flexibility of the bellow becomes important here as larger diameter bellows are not possible due to the installation restrictions.

As noted above, in some examples, some of the fibres may be cut in order to form the holes. However, the continuous fibre structure still presents some of the advantages set out above. In particular, a drive shaft formed of a continuous fibre structure still has lower thickness and weight, and higher critical speed, compared to a similar shaft formed of chopped fibres.

According to a second aspect of the present invention, there is provided a method of manufacturing a composite tube, the method comprising:
providing a mandrel, the mandrel comprising a section of larger diameter;
applying fibre over the mandrel;
applying resin to the fibre;
curing the resin;
forming at least one hole in the section of larger diameter; and
removing the mandrel.

The skilled person will appreciate that in some examples, some of the steps in the method above can be carried out in different orders. In some examples, the resin may be applied to the fibre before the fibre is applied to the mandrel (e.g. drawing the fibres through a resin bath, or using prepreg fibre tows. In other examples, resin may be applied after the fibre has been laid. In some examples, the hole(s) may be formed as the fibre is applied (i.e. before curing), for example through the use of a fibre redirecting structure provided on the mandrel to push fibres out of their normal direction. Such a fibre redirecting structure may be located where the hole will be formed. In some examples, the fibre redirecting structure may be a conical projection from the mandrel. In other examples, the hole may be formed by cutting through the structure. This would typically be after the curing step. Although this will involve severing some of the continuous fibres, many fibres will still extend across the bellow to maintain strength and transmit forces as discussed above.

Features of the composite tube described above in relation to the first aspect of the invention can equally be applied to the method of manufacturing a composite tube in relation to the second aspect of the invention.

According to a third aspect of the present invention, there is provided a composite tube, comprising:
a region of greater diameter forming a bellow;
wherein the bellow has a first side and a second side spaced apart in the axial direction of the tube;
wherein the composite tube is a fibre reinforced polymer tube;
wherein the fibre reinforced polymer comprises a braided fibre structure.

Features of the composite tube described above in relation to the first aspect of the invention can equally be applied to the composite tube described in the third aspect of the invention.

According to a fourth aspect of the present invention, there is provided a method of manufacturing a composite tube, the method comprising:
providing a mandrel, the mandrel comprising a section of larger diameter;
applying braided fibre over the mandrel;
applying resin to the braided fibre;
curing the resin; and
removing the mandrel.

The skilled person will appreciate that in some examples, some of the steps in the method above can be carried out in different orders. In some examples, the resin may be applied to the fibre before the fibre is braided, or before the fibre is applied to the mandrel. However, in a braiding process, the resin is typically applied after applying the fibre.

Features of the composite tube described above in relation to the first aspect of the invention can equally be applied to the method of manufacturing a composite tube in relation to the fourth aspect of the invention. In particular, the bellow can comprise at least one hole with any or all the features described above.

In some examples (applying to any aspect above), the section of mandrel comprising a larger diameter comprises a sacrificial structure. When removing the mandrel, the section of smaller diameter corresponds to the interior of the tube and can be removed axially through the tube, but the section of the mandrel with larger diameter that forms the bellow is surrounded on each side by fibre that prevents simple axial extraction of that mandrel part. A sacrificial structure is advantageous because it can be removed without any damage to the shaft. It is desirable not to leave the mandrel part within the bellow so as to save weight and allow for flexing. In some examples, the sacrificial section is a wash-out section that is water soluble and can be removed by flushing with water. In other examples the sacrificial section may be a dissolvable section or may be made from a material (e.g. wax) of lower melting temperature than the composite tube so that it can be melted and removed.

While the above examples have been described in general terms of a tube, the examples are particularly applicable to force transmission shafts such as drive shafts. Such drive shafts may be for transmission of axial loads through tension and compression, but the examples are particularly advantageous for rotary drive shafts for transmission of torque.

### Brief Description of the Drawings

Certain examples of the present disclosure will now be described with reference to the accompanying drawings in which:
Figure 1 is a perspective view of a drive shaft with bellows in accordance with an example of the present disclosure;
Figure 2 is a perspective view of a bellow with holes in accordance with an example of the present disclosure;
Figures 3-6 are views of a bellow in accordance with various examples of the present disclosure illustrating possible arrangements of holes;
Figures 7A and 7B are show comparative computer models of bellows with and without holes when the bellow is accommodating an angular misalignment;
Figures 7C and 7D are different views of Figures 7A and 7B;
Figure 7E shows a shape comparison between Figures 7C and 7D;
Figure 8 is a schematic view of the bellow and shaft showing the orientation of the fibres in accordance with an example of the present disclosure;
Figures 9A to 9D are cross-sectional views illustrating a method for manufacturing a composite tube in accordance with an example of the present disclosure.

### Detailed Description

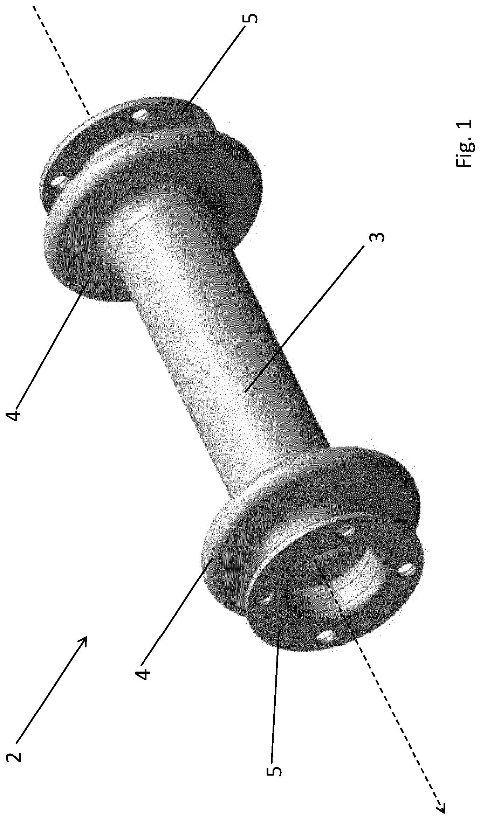

Figure 1 shows a perspective view of a drive shaft 2 according to an example of the present disclosure. The drive shaft 2 has a main shaft portion 3 and two bellows 4. Each bellow 4 has a larger diameter than the main shaft portion 3. In this particular example, the bellows 4 each have a diameter that is about two times that of the main shaft portion 3. The axis of the drive shaft 2 is shown as a dashed line A. the main shaft portion 3 is rotationally symmetric about the axis A. In this example, the bellows 4 are also rotationally symmetric about the axis A.

The drive shaft 2 also has two connector portions 5 in the form of flanges for connecting the drive shaft 2 to other components in the system, e.g. via the illustrated bolt holes.

The drive shaft 2 is formed from continuous fibre-reinforced polymer, with the fibre extending continuously from one end of the drive shaft 2 to the other end of the drive shaft 2. Fibres thus extend continuously from one end of the drive shaft, across the first bellow 4 to the main shaft portion 3 and then across the second bellow 4 to other end of the drive shaft 2. Thus the bellows 4 are integrally formed with the main shaft portion 3. Forces can therefore be transmitted through the drive shaft 2 (including through both bellows 4) via continuous, unbroken fibres. It will be appreciated that Figure 1 shows two bellows 4 as this is a common arrangement, but the drive shaft 2 could have only a single bellow 4 where that would provide sufficient articulation of the drive shaft 2.

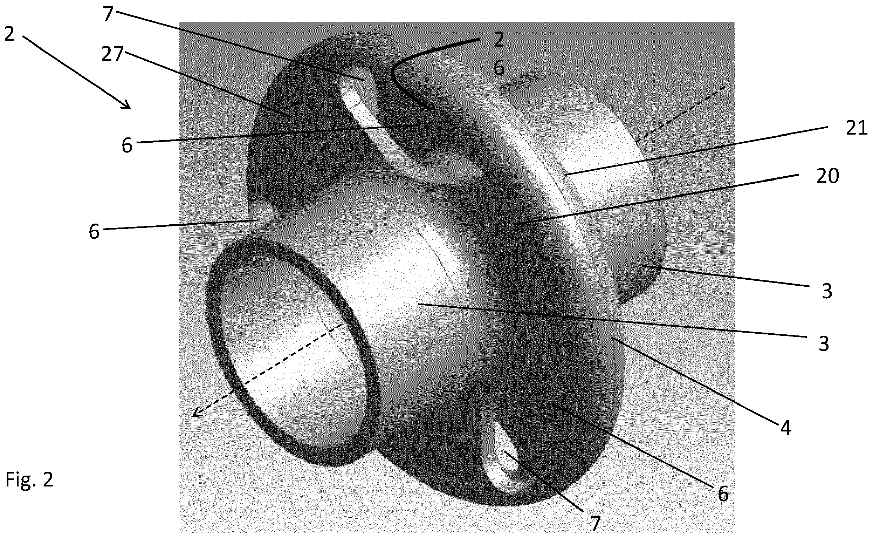

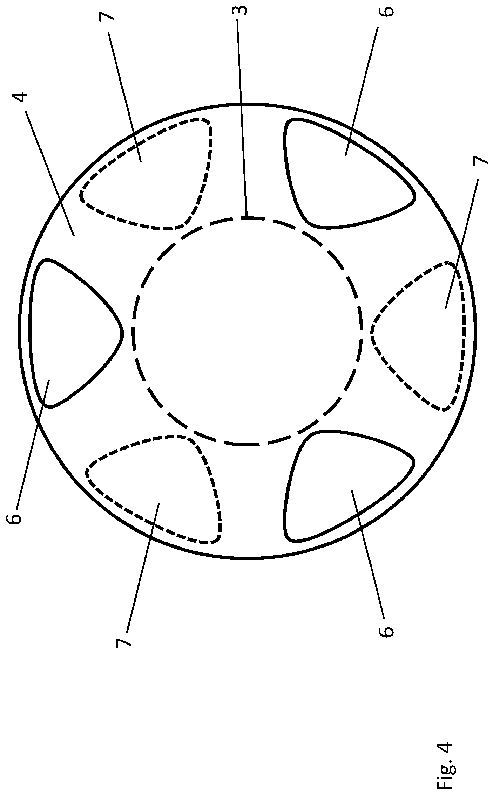

Figure 2 shows a perspective view of a drive shaft 2 according to another example of the present disclosure. Main shaft portions 3 extend on both sides of the bellow 4. The axis A of the main shaft portion 3 is shown as a dashed line as in Figure 1. The bellow 4 has a first side 20 and a second side 21 that are spaced apart in the axial direction of the main shaft portion 3. These sides 20, 21 form an expanded region of the main shaft portion 3, i.e. a region of larger diameter than the main shaft portion 3. The two sides 20, 21 join together at their radially outer diameters. Each side 20, 21 joins the main shaft portion 3 at its radially inner diameter. The main shaft portion 3 and the bellow 4 (including its two sides 20, 21) are formed integrally as a single unit. In this example, the first side 20 has three holes 6 formed therein. The second side 21 also has three holes 7 formed therein (one of the holes 7 is not visible in figure 2). The configuration of the holes can be seen more clearly in Figure 4.

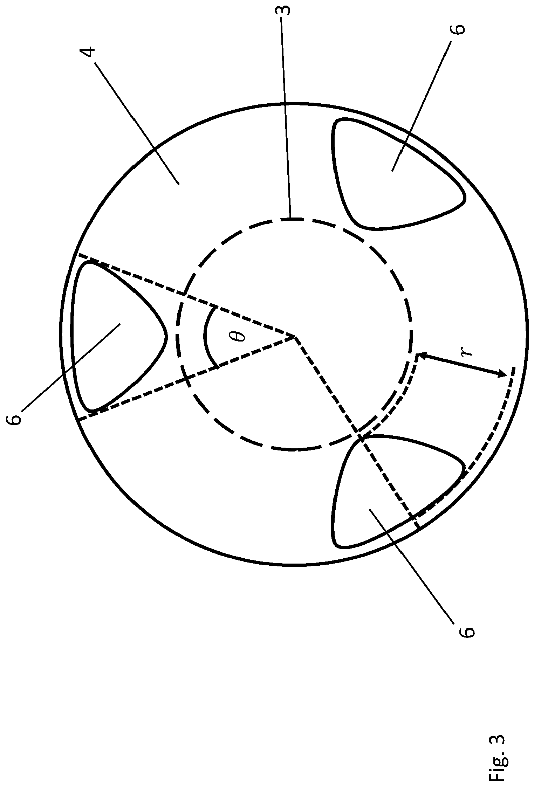

Figure 3 shows the first side 20 of the bellow 4 in order to demonstrate the angular and radial extent of the holes 6. The circumference of the main shaft portion 3 is shown as a dashed circle. Two radii are shown as dashed lines extending from the axis of the main shaft portion 3 in a plane perpendicular to the axis. The angular extent θ of the upper hole 6 in Figure 3 is shown as the angle between these two radii. The radii are selected so that the contact the outermost edges of the hole 6, i.e. such that the entire hole 6 is located between the two radii. The radial extent r of another hole 6 (on the lower left of Figure 3) is also illustrated and is defined as the radial distance between two circles which contact the radially innermost point of the hole 6 and the radially outermost point of the hole 6 and which thus completely contain the hole 6 between them. In this example of the present invention, the holes 6 all have the same angular extent and the same radial extent. The holes 6 also all have the same shape.

In this example, the holes 6 each have an angular extent θ of approximately 40°. As there are three holes, the combined angular extent is 120°.

Figure 4 shows a view of the bellow 4 similar to that of Figure 3, viewed along the axis of the main shaft portion 3. The circumference of the main shaft portion 3 is shown as a dashed circle. The holes 6 in the first side 20 of the bellow 4 are shown as solid lines, and the holes 7 in the second side 21 of the bellow 4 are shown as dashed lines to illustrate their position relative to the holes 6 of the first side 20, while indicating that they are not directly visible through the first side 20.

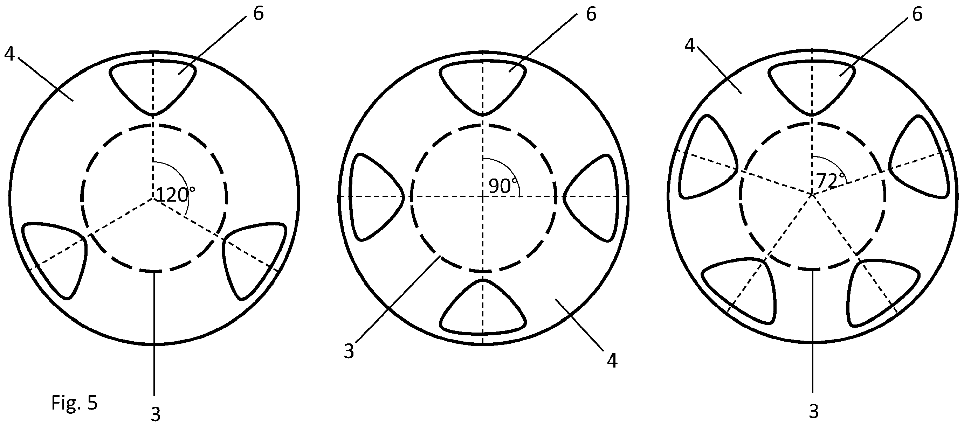

Each side of the bellow 4 has three holes 6, 7, all the holes 6, 7 having the same radial extent and the same angular extent. The holes 6, 7 are evenly angularly distributed around each side of the bellow 4, which will be discussed in more detail in relation to Figure 5. The holes 6 on the first side 20 have no overlap in the angular direction with the holes 7 on the second side 21. This is beneficial because for each hole 6, 7, the associated region on the opposite side of the bellow 4 does not have any holes in the material. Therefore, in places where the hole 6, 7 reduces the material strength on one side 20, 21 of the bellow 4, the other side 21, 20 of the bellow 4 can compensate with a region of higher strength. This is illustrated best in Figure 2 where a region of material 26 is located on the second side 21 opposite the hole 6 in the first side 20. Additionally, a region of material 27 is located on the first side 20 opposite the hole 7 in the second side 21.

Figure 5 illustrates various examples of the first side 20 of the bellow 4 when there are three, four, and five holes respectively, in each case evenly angularly distributed around the first side 20 of the bellow 4.Thus, in the examples given in Figure 5, three holes are positioned at 120° intervals, four holes are positioned at 90° intervals, and five holes are positioned at 72° intervals. These arrangements are advantageous because the drive shaft 2 rotates in use. Any angular or lateral misalignment of the main shaft portions 3 on either side of the bellow 4 will thus cause a periodic force to be applied to a given portion of the bellow as it rotates around the axis. The response of the bellow 4 will vary with the presence / absence / location of the holes 6, 7 which will lead to a vibration or oscillation in the drive shaft 2. An even angular distribution of the holes 6, 7 as shown in the examples of Figure 5 means that the response of the shaft is more uniform as it goes through an entire rotation, thereby keeping the amplitude of vibration to a minimum and thus maintaining a high critical speed for the drive shaft 2.

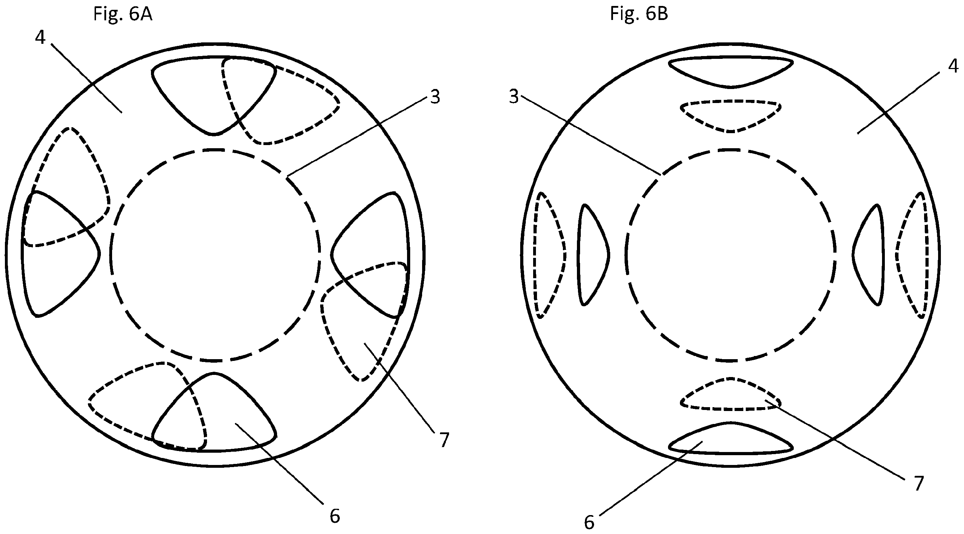

Figures 6A and 6B shows views of the first side 20 of the bellow 4 in various examples of the present disclosure. The holes 6 in the first side 20 of the bellow 4 are shown as solid lines, and the holes 7 in the second side 21 of the bellow 4 are shown as dashed lines. It will be appreciated that dashed lines have been used for the entirety of the holes 7, even though in Figure 6A parts of those holes would actually be visible through the holes 6 in the first side 20. This is for clarity of illustration.

Figure 6A shows an example in which the holes 6 on the first side 20 are offset in relation to the holes 7 on the second side 21, and there is an overlap in the angular and radial extent of the holes 6, 7. This is in contrast to Figure 4 in which the holes 6 on the first side 20 are angularly offset from the holes 7 on the second side 21 with no overlap.

Figure 6B shows an example in which the holes 6 on the first side 20 are offset in relation to the holes 7 on the second side 21, and there is an overlap in the angular extent of the holes 6, 7 but no overlap in the radial extent of the holes 6, 7.

The examples shown in Figures 6A and 6B are not intended to be limiting. There are many configurations that are possible with different relative positioning of the holes 6, 7 which achieve differing amounts of overlap between the angular and/or radial extents of the holes 6, 7.

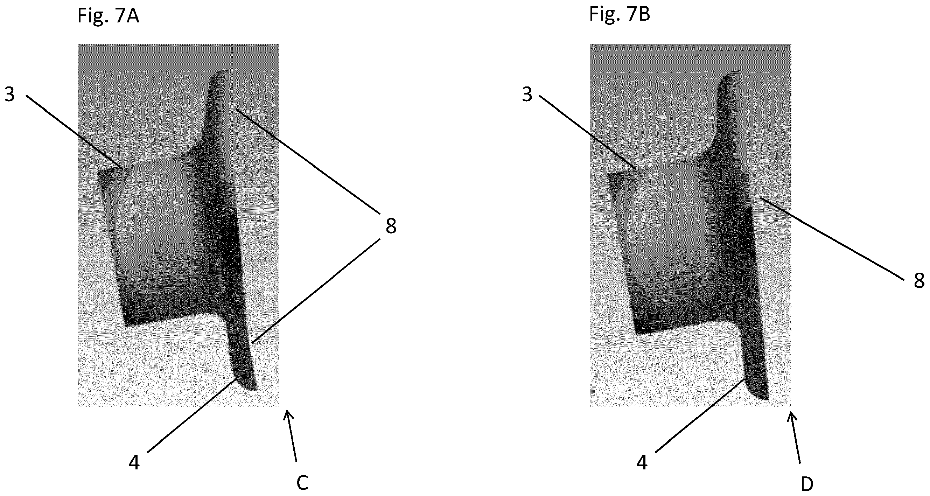

Figures 7A and 7B show a computer model of one side of the drive shaft 2 when the main shaft sections 3 on either side of the bellow 4 are angularly misaligned (i.e. the two main shaft sections 3 are not parallel). Although only one side of the bellow 4 is shown, the model is based on a full bellow 4 (i.e. with both first side 20 and second side 21). Only one side is shown so as to better illustrate the effect of the holes on the shape of the bellow 4.

In Figure 7A the bellow 4 has holes 6, 7 as shown in Figure 2 and in Figure 7B the bellow 4 has no holes in the sides 20, 21. In both cases, the angular articulation between the main shaft portions 3 (and thus accommodated by the bellow 4) is 1°. In Figure 7B, it can be seen that the edge of the bellow 4 on the right hand side of the figure (which represents the midline of the bellow 4 around the region 8 of maximum diameter when it is in an unarticulated state) is flat(i.e. planar). This shows that a bellow 4 without holes bends symmetrically on each side 20, 21 of the bellow 4 so that the midline of the bellow 4 around its region 8 of maximum diameter remains planar, but merely deflected relative to the axes of the main shaft portions 3..

However, in Figure 7A it can be seen that the bellow 4 has deformed such that the region of maximum diameter 8 has become deformed to a non planar shape. In particular, the holes 6, 7 enable the bellow 4 to bend out of the plane perpendicular to the axis of the main shaft portion 3 in a different way to regions with no holes 6, 7 in response to the articulation. Thus the deformation of the bellow 4 varies angularly around the axis of the main shaft portion 3, i.e. same angular regions experience more deformation than others. This is because each hole 6, 7 has an associated region 26, 27 on the opposite side of the bellow 4 and when the shaft bends about its axis, the region 26, 27 of the bellow 4 is able to move towards its associated hole 6, 7. As the holes are alternately on each side 20, 21 of the bellow, deformation of the bellow 4 alternates thereby causing the midline of the bellow 4 at the region of maximum diameter 8 to become non-planar. This gives the bellow 4 with holes 6, 7 more flexibility than a bellow without holes.

In the particular example shown and modelled in Figures 7A and 7B, the reaction force of the shaft to the 1 degree articulation was around 55 Nm in the Figure 7A arrangement with holes 6, 7, while the reaction force of the shaft to the 1 degree articulation was around 101 Nm in the Figure 7B arrangement with no holes. Thus the bellow 4 with holes is less stiff than the bellow 4 with no holes.

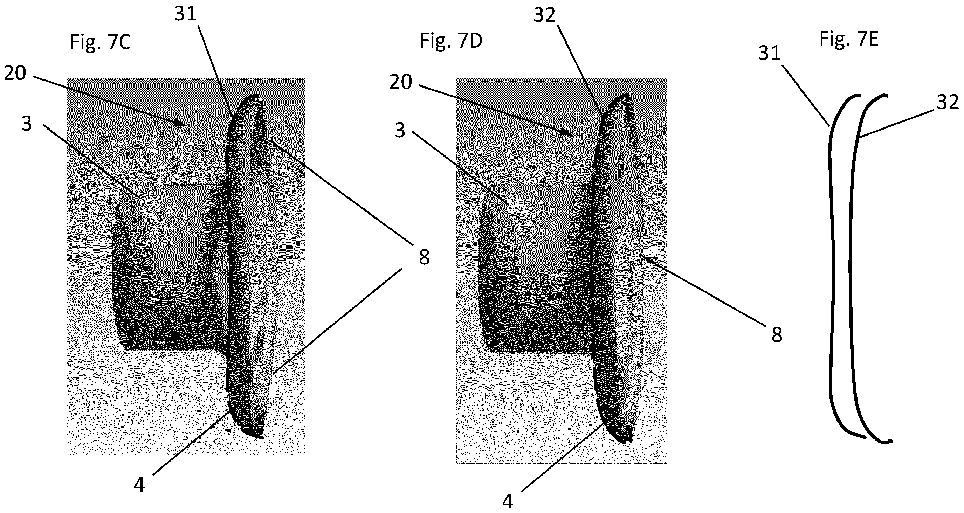

Figures 7C, 7D and 7E illustrate this effect further. Figure 7C correspond to the model of Figure 7A, but is viewed in the direction of arrow C in Figure 7A. Figure 7D corresponds to the model of Figure 7B, but is viewed in the direction of arrow D in Figure 7B. On each of Figures 7C and 7D, a dashed line 31, 32 has been superimposed on the model indicating the curvature of the first side 20 of the bellow 4. In Figure 7E, these two lines 31, 32 have been duplicated and placed next to each other (in solid form rather than dashed form) to highlight the difference in shape. In Figure 7E it can clearly be seen how the bellow 4 with holes 6, 7 (as modelled in Figures 7A and 7C has a more pronounced curvature (tighter curve) in line 31 at the top and bottom of Figure 7E, with a concave deflection towards the right in the middle of line 31 of Figure 7E. By contrast line 32 (corresponding to the model of Figures 7B and 7D) is a more uniform convex curve throughout.

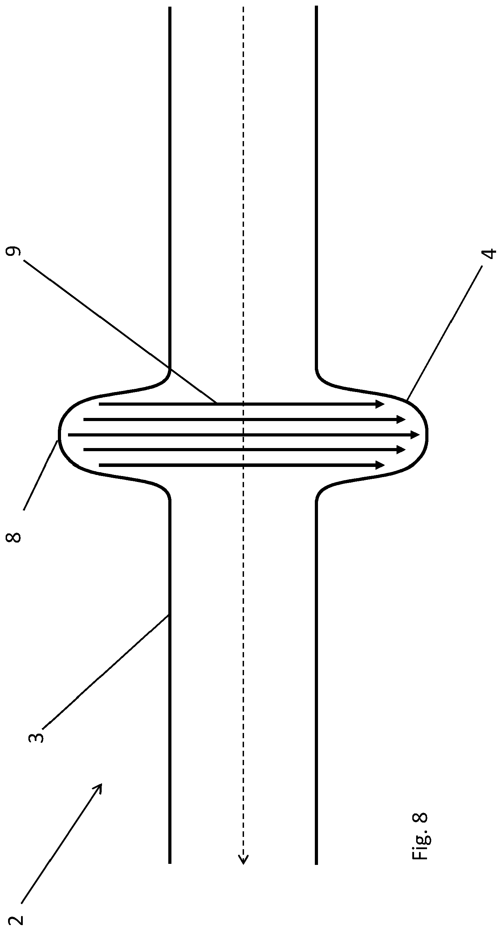

Figure 8 is a schematic view of the drive shaft 2 showing the orientation of fibres 9 in accordance with an example of the present disclosure. A portion of the fibres 9 are oriented substantially in the circumferential or "hoop" direction in the region of maximum diameter 8 of the bellow 4. This fibre arrangement is beneficial for transmission of torque from one side of the bellow to the other, but is also particularly advantageous for reducing the stiffness of the bellow 4 against angular articulation. Axially oriented fibre across this region provides high axial tensile strength and thus resists articulation, making the bellow 4 stiffer rather than compliant. On the other hand, the hoop fibre 9 is less stiff against articulation and therefore allows a more flexible bellow 4 to be formed. It may be noted that this advantage applies whether there are hole 6, 7 or no holes. Any fibre placement technique may be used to lay the fibres 9 in the hoop direction (or close to it) in order to achieve this benefit. However, advantageously, using a braiding technique to deposit the fibre has a natural tendency to orientate the fibres more towards the hoop direction as the diameter increases from a small diameter (i.e. on the main shaft section 3) to a larger diameter (i.e. the region 8 of maximum diameter of the bellow 4). Therefore a braided fibre bellow 4 is particularly flexible.

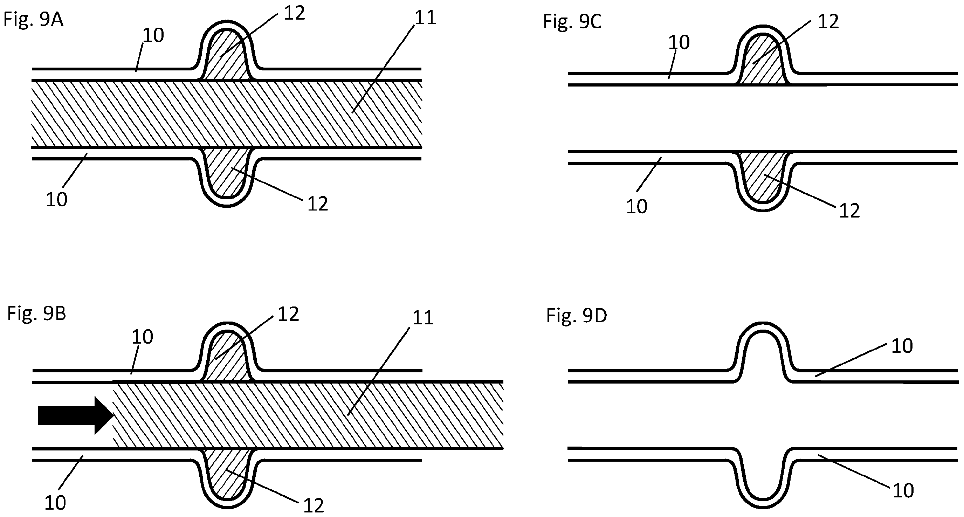

Figures 9A to 9D illustrate a method for manufacturing a composite tube in accordance with an example of the present disclosure. Figures 9A to 9D each show a cross-sectional view of the drive shaft 2 at various stages during its method for manufacture.

Figure 9A shows a fibre and resin layer 10 applied over a mandrel 11, 12. The mandrel comprises two sections. The first section 11 is a cylinder that is used to form the main shaft portion 3. The second section 12 has a larger diameter than the first section 11 and is used to form the bellow 4. The second section 12 is a removable section. In some examples it is a sacrificial section.

The resin and fibre layer 10 is applied by any of a number of techniques, including filament winding, braiding, automated fibre placement or fibre sheet layup. The resin may be applied before, during or after the fibre. In some examples a fibre sock is braided over the mandrel parts 11, 12 and then fibre sock is impregnated with resin. The resin and fibre layer 10 is then cured with the mandrel 11, 12 in place. Figure 9B shows the first step in removing the mandrel 11, 12 after the resin and fibre layer 10 is cured. The first section 11 is removed by sliding it out of one end of the main shaft portion 3. The second section 12 remains in place as shown in Figure 9C. The second section 12 is then removed. In one example of the present invention, the second section 12 is a wash-out section that can be removed by flushing with water.

Figure 9D shows the drive shaft 2 after both the first and second mandrel parts 11, 12 have been removed. It will be appreciated that the thickness of the fibre and resin layer 10 and the height and shape of the bellow 4 in this figure are not necessarily shown to scale.

It will be appreciated that this is just one example of a method for manufacturing the drive shaft 2. In other examples of the present disclosure, the entire mandrel 11, 12 may be formed in one section which may be collapsible, deformable, sacrificial or capable of being dismantled. In other examples, one or both parts of the mandrel 11, 12 may be collapsible, deformable, sacrificial or capable of being dismantled for removal from the drive shaft 2.

## Claims

1. A composite tube, comprising:
a region of greater diameter forming a bellow;
wherein the bellow has a first side and a second side spaced apart in the axial direction of the tube;
wherein each side of the bellow comprises at least one hole;
wherein the at least one hole on the first side is offset in relation to the at least one hole on the second side.

2. A composite tube as claimed in claim 1, wherein the offset is an angular offset around the axis of the tube.

3. A composite tube as claimed in claim 1 or 2, wherein each side of the bellow comprises a plurality of holes.

4. A composite tube as claimed in claim 1, 2 or 3, wherein the holes are evenly angularly distributed around each side of the bellow.

5. A composite tube as claimed in any preceding claim, wherein all the holes have the same radial extent.

6. A composite tube as claimed in any preceding claim, wherein all the holes have the same angular extent.

7. A composite tube as claimed in any preceding claim, wherein the holes on the first side have no overlap in the angular direction with the holes on the second side.

8. A composite tube as claimed in any preceding claim, wherein each hole has an associated region on the opposite side of the bellow; and
when the tube bends about its axis, at least one such region of the bellow moves towards its associated hole.

9. A composite tube as claimed in any preceding claim, wherein the combined angular extent of holes on the first side and/or the second side is at least 90 degrees, optionally at least 120 degrees, optionally at least 150 degrees.

10. A composite tube as claimed in any preceding claim, wherein each of the first side and the second side of the bellow form an angle to a plane perpendicular to the axis of the shaft of no more than 30 degrees, optionally no more than 10 degrees.

11. A composite tube as claimed in any preceding claim, wherein the composite tube is formed from fibre reinforced polymer.

12. A composite tube as claimed in claim 11, wherein the fibre reinforced polymer comprises a braided fibre structure.

13. A composite tube as claimed claim 11 or 12, wherein the fibre reinforced polymer comprises fibres oriented in the circumferential direction in the region of maximum diameter of the bellow.

14. A composite tube as claimed in any of claims 11, 12 or 13, wherein at least some fibres of the fibre reinforced polymer are continuous throughout the tube.

15. A method of manufacturing a composite tube, the method comprising:
providing a mandrel, the mandrel comprising a section of larger diameter;
applying fibre over the mandrel;
applying resin to the fibre;
curing the resin;
forming at least one hole in the section of larger diameter; and
removing the mandrel.
